**Europäisches Patentamt**

(19) **European Patent Office**

**Office européen des brevets**

(11) **EP 0 618 098 B1**

(12) **EUROPEAN PATENT SPECIFICATION**

(45) Date of publication and mention
of the grant of the patent:
**07.05.1997 Bulletin 1997/19**

(51) Int. Cl.$^6$: **B60H 1/00**, G05D 23/19

(21) Application number: **94104584.1**

(22) Date of filing: **23.03.1994**

(54) **A process and system for controlling environmental conditions in a passenger compartment**

Verfahren und Einrichtung zur Kontrolle der Klimabedingungen in einem Fahrgastraum

Procédé et dispositif pour contrôler des conditions ambiantes dans un compartiment à voyageurs

(84) Designated Contracting States:
**DE FR GB SE**

(30) Priority: **01.04.1993 IT TO930220**

(43) Date of publication of application:
**05.10.1994 Bulletin 1994/40**

(73) Proprietor: **FIAT AUTO S.p.A.**
**10135 Torino (IT)**

(72) Inventor: **Mingrino, Fabio**
**I-10137 Torino (IT)**

(74) Representative: **Quinterno, Giuseppe et al**
**c/o JACOBACCI & PERANI S.p.A.**
**Corso Regio Parco, 27**
**10152 Torino (IT)**

(56) References cited:
EP-A- 0 495 117      US-A- 5 145 112

- **PATENT ABSTRACTS OF JAPAN vol. 16, no. 290 (M-1272) 26 June 1992 & JP-A-04 078 709 (ISUZU MOTORS LTD) 12 March 1992**
- **PATENT ABSTRACTS OF JAPAN vol. 21, no. 480 (P-801) 15 December 1988 & JP-A-63 196 917 (MITSUBISHI HEAVY IND LTD) 15 August 1988**
- **PATENT ABSTRACTS OF JAPAN vol. 17, no. 269 (P-1544) 25 May 1993 & JP-A-05 010 791 (YAMATAKE HONEYWELL CO LTD) 19 January 1993**
- **PATENT ABSTRACTS OF JAPAN vol. 17, no. 298 (M-1425) 8 June 1993 & JP-A-05 018 592 (YAMATAKE HONEYWELL CO LTD) 26 January 1993**
- **PATENT ABSTRACTS OF JAPAN vol. 16, no. 395 (M-1299) 21 August 1992 & JP-A-04 131 653 (YAMATAKE HONEYWELL CO LTD) 6 May 1992**

**Description**

The present invention relates generally to processes and systems for controlling thermal comfort in an environment, and particularly in the passenger compartment of a vehicle, as known e.g. from US-A-5 145 112.

Numerous examples of control and air conditioning processes and systems for motor vehicles are known in the art; however, none of these systems is able to ensure optimum thermal comfort within a motor vehicle because of the intrinsic difficulty of this task. In fact, the passenger vehicle of a motor vehicle is a very difficult environment to control thermally because of its small dimensions and high exposure to external factors due to the glass surfaces, the low thermal insulation and the flow of air over the vehicle.

The passenger compartment is therefore exposed to strong external influences such as solar radiation, which is even more intense through the glass surfaces which are becoming ever more extensive on current motor vehicles, and the moisture of the air which typically is determined by the air outside the vehicle. On the other hand, the weight and dimensions of the motor vehicle result in thermal insulation being kept to a minimum.

The most developed systems currently installed on motor vehicles allow the user to set the desired temperature within the passenger compartment and then maintain this temperature by utilising a classic closed loop control procedure and a temperature sensor within the passenger compartment.

This procedure is certainly better than the older air conditioning systems which typically used an open loop control and required continuous adjustment by the user. However, even the more developed air conditioning systems still have significant disadvantages. The systems known in the art do in fact control the air temperature within the passenger compartment; however, the sensation of thermal comfort which the user experiences is not dependent only on the air temperature, but on other factors such as the solar radiation, the relative humidity and the presence of air currents (due for example to the air outlets of the air conditioning system) within the passenger compartment.

Other contributory factors which affect thermal comfort are the type of clothing worn by the user (which naturally depends on the external environmental conditions) and the temperature of, and therefore the radiation from the internal walls of the passenger compartment due to the temperature and flow of air outside the motor vehicle.

This therefore establishes how the control of thermal comfort within a motor vehicle presents considerable problems.

The object of the present invention is that of providing a control process and system which makes it possible to resolve all the above indicated problems in a satisfactory manner.

According to the present invention, this object is achieved thanks to a process having the characteristics indicated in claim 1. Embodiments of the inventive process are disclosed in claims 2-7. A respective system is disclosed in claim 8.

Further advantages and characteristics of the present invention will become apparent from the following detailed description, assisted by the attached drawings, provided by way of non-limitative example, in which:-

Figures 1 and 2 are two, schematic circuit representations illustrating the principle on which the present invention is based,and
Figure 3 is a schematic block diagram of the control system according to the present invention.

The present invention is based on the principle of controlling not the air temperature within the passenger compartment but rather a variable called the equivalent temperature which will be described in detail hereinbelow, which is directly correlated to the thermal comfort of a person within the passenger compartment.

For a better understanding several theoretical considerations will first be explained.

Physiological research has been able to establish that a person is in a state of optimal thermal comfort when the internal temperature within the body is constant at about 37°C and is maintained there without force, that is without perspiration to dissipate an excess of heat and without physical movement to generate heat. This is to say that, in practice, in these conditions, the heat generated by the normal metabolism of the person is completely dissipated, without difficultly, into the environment. The heat exchange relationship between the person and the environment can be represented by means of an equivalent electrical circuit according to a practice often used in engineering.

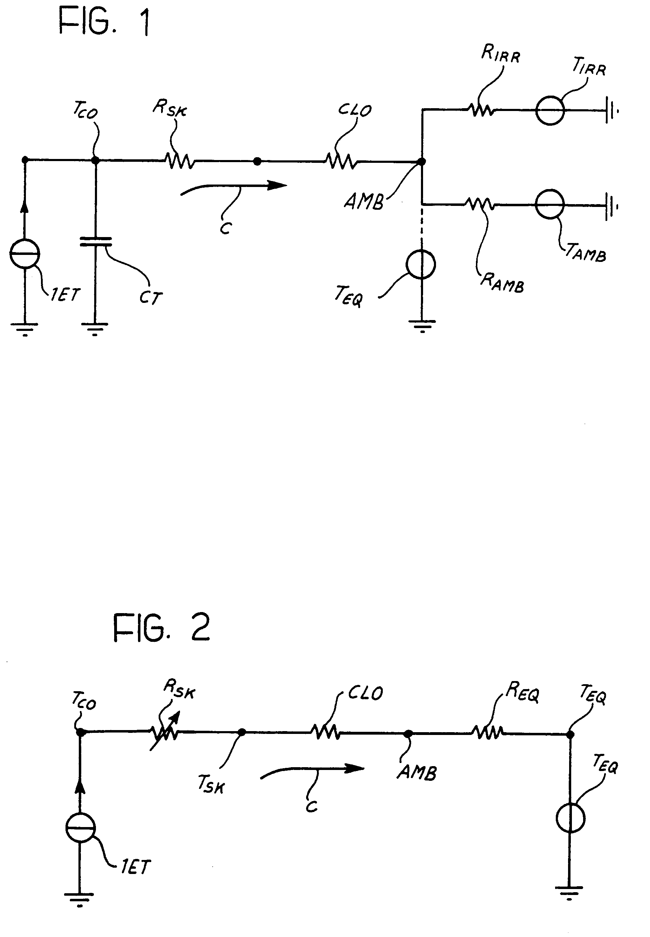

In this circuit, shown in Figure 1, the voltage is equivalent to temperature and electrical current is equivalent to a flow of heat. The heat generated by the metabolism of a person can be represented as an ideal current generator MET in that this heat is in any event produced by the person independently of other factors. In parallel with the ideal current generator MET there is a capacitor CT which represents the thermal capacity of the person's body. The node at the output of the ideal current generator MET, where it is connected to the capacitor CT, is indicated Tco since the voltage at this node represents the internal body temperature of the person.

The internal body temperature Tco is naturally correlated to the surface temperature Tsk of the skin by the thermal resistance of the skin indicated Rsk. The optimum value for Tsk is about 33.4°C but can vary according to the person or the environmental conditions.

The skin surface temperature Tsk is connected in a similar manner, via the thermal resistance CLO of the clothing, to a node AMB which represents the environment. To a first approximation the node AMB can be considered as being connected to two circuit branches.

A first branch is constituted by the thermal resistance Ramb which connects the node AMB to an ideal voltage generator Tamb which represents the environmental air temperature since it can be supposed, still to a first approximation, that this temperature is not influenced by the presence of the person. The second branch is similar to the first and is constituted by the thermal resistance Rirr which connects the node AMB to the ideal voltage generator Tirr and which represents the radiation conditions in which the person is located.

This latter portion of the circuit can be simplified by joining the two circuit branches just described into a single branch. The circuit then becomes as shown in Figure 2.

This circuit is identical to that described with reference to Figure 1 up to the thermal resistance CLO of the clothing. The thermal resistance CLO is connected to a node, again in this case indicated AMB, which in turn is connected via a thermal resistance Req to a node Teq. The node Teq is in turn connected to an ideal voltage generator which, naturally, is also indicated Teq.

It is therefore seen that the portion of the circuit downstream from the node AMB has been simplified into a branch constituted by a resistance Req and an equivalent voltage generator Teq. Moreover, the capacitor CT has been eliminated since it is involved only in the heat exchange conditions between the person and the environment. The operation of the circuit is very simple, the current C produced by the current generator MET passes through the resistance Rsk, the resistance CLO, and the resistance Req, and is then absorbed by the ideal voltage generator Teq. Since the current C is constant, in that it is set by the current generator MET, the voltages at the nodes Tco, Tsk and AMB depend on the values of the various resistances Rsk, CLO, Req and the voltage Teq set by the ideal voltage generator. The current C, however, represents the heat dissipated from the person which, as has been mentioned, is constant, and the voltages Tco, Tsk, AMB, Teq respectively represent the temperatures.

In particular, the temperatures of interest are the internal body temperature Tco and the skin temperature Tsk since the thermal resistances Rsk, CLO, Req are given (that is they are constants) in that they respectively represent the thermal resistance of the skin, the thermal resistance of the clothing worn by the person and the thermal resistance between the person and the overall environment. It can be seen that in practice what determines the temperatures Tco and Tsk is the temperature Teq.

By varying the temperature Teq it is therefore possible to bring the temperature Tco to its optimum value of about 37°C. In practice there is a single value of the temperature Teq such that the temperature Tco assumes its desired optimum value.

The equivalent temperature Teq is therefore the variable which it is desired to control in order to obtain optimum thermal comfort for the person. The equivalent temperature Teq is a complex variable dependent on many different factors. It can however, be theoretically defined in the following way.

The equivalent temperature Teq is the temperature correlated to the thermal sensation experienced by a person in an unventilated environment with the walls and the air at the same temperature. For example, if a person in an environment X with a certain ventilation, a certain wall temperature, a certain air temperature and a certain thermal radiation, experiences the same thermal sensation as he would experience in an unventilated environment Y having a wall temperature equal to the air temperature, then one can say that the person perceives in environment X, the temperature of the environment Y which is called the equivalent temperature and the following relation is valid:

equivalent temperature = wall temperature = air temperature.

In the specific case under examination, the equivalent Teq can be considered as a variable, or quantity, dependent on the wall temperature, the air temperature within the passenger compartment, the temperature of the air introduced into the passenger compartment through the air inlets, the flow rate through the air inlets, and the radiation entering through the glass surfaces and radiated from the walls. A control process and system operating according to the principle just described, will now be described.

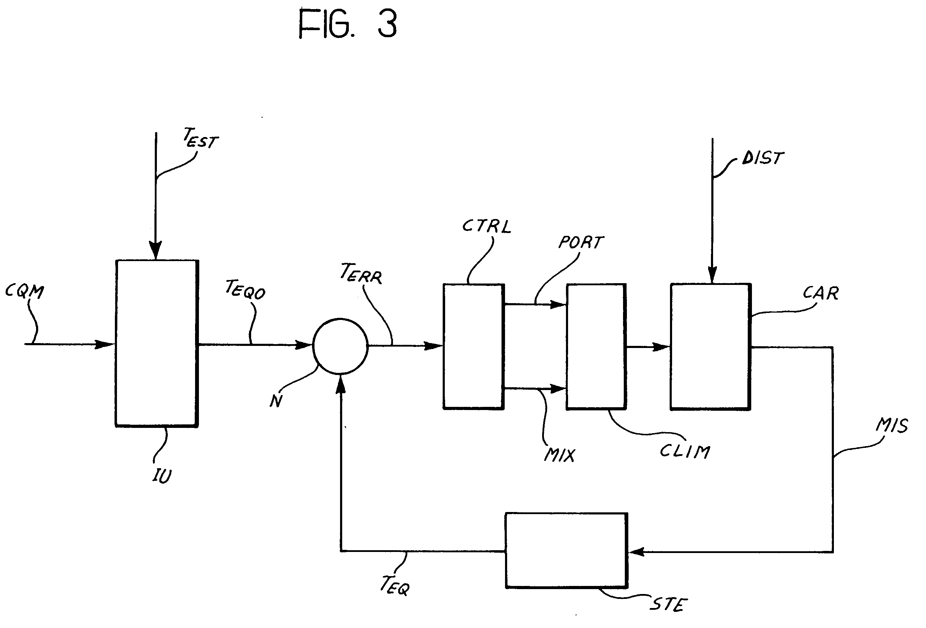

Referring to Figure 3, IU represents a user interface intended to receive the commands COM which the user desires to communicate to the control system. The user interface IU also receives an input signal Test indicative of the temperature outside the vehicle. The signal Test serves to provide the system with an estimate, on the basis of the outside temperature, of the type of clothing worn by the person. The commands COM introduced by the user on the other hand serve at the interface IU to set, and possibly modify, a reference equivalent temperature TeqO.

In an alternative procedure TeqO is calculated starting from a measurement of Test, that is to say the temperature outside the vehicle at the beginning of the journey and a hypothesis of MET, that is to say the value of the user's metabolism.

The measurement of Test makes it possible to estimate the thermal resistance CLO, that is to say the type of clothes worn. The value of CLO and MET permit calculation of TeqO.

$$CLO = m \cdot Test + q$$

$$TeqO = a \,.\, CLO + b \,.\, MET$$

Where m,q,a,b are constants.

If, by means of the user interface console IU on board the vehicle, the user requests that it be warmer or colder respectively, the metabolism value MET initially hypothesised is reduced or increased and the reference equivalent temperature TeqO is recalculated.

The reference equivalent temperature TeqO constitutes the reference value of the control system, that is to say the value to which the control system seeks to maintain the control variable Teq. The reference temperature TeqO is, in fact, compared in a subtraction node N with the equivalent temperature Teq within the vehicle. The equivalent temperature Teq can be derived in two substantially different ways.

A first way uses an equivalent temperature sensor STE able to produce a signal indicative of the equivalent temperature Teq on the basis of physical quantities, generally indicated MIS, which determine the equivalent temperature Teq. The equivalent temperature sensor STE is therefore a device sensitive not only to the air temperature but also to radiation and ventilation conditions present within the interior of the vehicle. Examples of sensors of this type are described in European Patent Application No. EP-A-0 526 425 in the name of the same Applicant.

A second way of deriving the equivalent temperature Teq is that of using not a physical device but a processor device, still indicated STE, also called an estimator, able to calculate Teq on the basis of signals indicative of the physical quantities MIS on which the equivalent temperature Teq depends.

This processor device STE can be formed, for example, by the use of a microprocessor configured to make the calculations of Teq according to the procedure which will now be described.

Teq is defined by the relation:

$$Teq = (1/Req) \, [W_c + W_r] + T_s$$

where:

- $W_c$ is the power exchanged by convection
- $W_r$ is the power exchanged by radiation
- Req is the equivalent resistance of the environment
- $T_s$ is a reference temperature

The object of the acquisition of Teq is that of making available a quantity completely correlated to the energy exchange between the man and the environment and therefore to the thermal sensation.

In a vehicle

$$W_c = h_c \,.\, (Ta - Ts)$$

$$W_r = \sigma \,.\, E \,.\, f \,.\, [\, Tp^4 - Ts^4 \,]$$

where

- Ta is the passenger compartment air temperature
- $h_c$ is the heat exchange coefficient
- Tp is the vehicle wall temperature
- Ts is the reference temperature
- $\sigma$ is the Boltzman constant
- E is the wall emissivity
- f is the man-wall form factor

Therefore, in a vehicle, by measuring Ta and estimating the heat exchange Tp in the vehicle by means of a mathematical model, and fixing the remaining parameters, it is possible to calculate Teq according to the above-explained relation.

However, in a vehicle, the passengers also perceive the air which exits from the air outlets of the air conditioning system of the vehicle, from which it can be hypothesised that the effectively perceived Teq is the sum of two Teqs; one (Teq) calculated as explained starting from Ta and Tp, and another ($Teq_{tt}$) calculated starting from the temperature Tt of the treated air that is to say exiting from the air outlets:

$$Teq_{estimated} = k1 \,.\, Teq + k2 \,.\, Teq_{tt} \,,$$

The weightings k1 and k2 are determined from the proportion of the body zone subjected to one or the other Teq.

$$Teq_{tt} = h_c \cdot (Tt-Ts)/Req + Ts$$

The radiation is neglected since it has no influence on the zone over which Tt flows at a certain ventilation. All the quantities have been already defined and :

Tt is the temperature of the treated air

The value of $h_c$ varies with the controlled air flow rate.

Finally, $Teq_{estimated}$ is used as feedback for the control system, that is to say as measured Teq, and will therefore be indicated in an identical manner.

On the basis of the signals relating to the reference temperature TeqO and the equivalent temperature Teq the control system operates in a classical closed loop manner. The subtraction node N in fact generates an error temperature Terr given by the difference between TeqO and Teq which is sent to a control unit CTRL.

On the basis of the error temperature Terr the control unit CTRL determines the flow rate PORT and the temperature MIX of the air to be introduced into the passenger compartment of the motor vehicle and sends the associated control signals to a conventional air conditioning unit CLIM.

It is possible to form the control unit CTRL on the basis of a mathematical model of the heat exchange in the vehicle and the thermal sensation of the man:

$$T_b = (1/Cb) \, [Gb \, [Test - T_b] + Gb \, [T_i - T_b]]$$

$$T_g = (1/Cg) \, [Gg \, [Test - T_g] + Gb \, [T_i - T_g]]$$

$$T_i = (1/Ci) \, [Gb \, [T_b - T_i] + Gg \, [T_g - T_i] + [Tt - T_i] \cdot Q]$$

$$Tt' = A.Tt + B \, (cold + (hot - cold) \cdot \alpha)$$

$$T_p = x \, T_b + y \, T_g$$

$$Teq_{estimated} = k1 \, Teq + K2 \, Teq_{tt}$$

where

- $T_b$ is the temperature of the body of the vehicle
- $T_g$ is the temperature of the glass in the vehicle
- $T_i$ is the air temperature inside the vehicle
- Gb is the thermal conductivity of the body
- Gg is the thermal conductivity of the glass
- Cb is the thermal capacity of the body
- Cg is the thermal capacity of the glass
- Ci is the thermal capacity of the interior of the vehicle
- Q is the rate of flow of air
- A, B are the dynamics of Tt
- hot is the maximum temperature of the heater
- cold is the minimum temperature of the evaporator
- $\alpha$ is the position of the mixing flap
- x, y are the coefficients for the estimation of Tp

By utilising the above model with all the indicated parameters by means of the control synthesis technique called LQG/LTR or Hinf, a control unit CTRL of desired performance is achieved.

(LQG = Linear Quadratic Gaussian

LTR = Loop Transfer Recovery

Hinf = H infinity)

Once synthesised the control unit CTRL can be represented by:

$$MIX' = amix \cdot MIX + bmix \cdot Terr$$

$$PORT' = apor \cdot PORT + bpor \cdot Terr$$

where

amix, bmix are dynamic matrices for the control of the temperature MIX

apor, bpor are dynamic matrices for the control of the ventilation PORT.

The sequence of operations to control Teq is therefore as follows:

1) Calculate TeqO as explained

2) Estimate $Teq_{estimated}$ = Teq as explained

3) Calculate Terr = TeqO - Teq

4) Calculate at a frequency desired by the design of the control units CTRL:

$$MIX' = amix \cdot MIX + bmix \cdot Terr$$

$$PORT' = apor \cdot PORT + bpor \cdot Terr$$

5) Adjust the position of the air mixer to obtain the calculated temperature MIX' calculated and the calculated ventilation PORT'

6) Return to point 2) and repeat the operations from 2) to 6) until the end of the journey;

If a "colder" or "hotter" request is made, return to point 1) and recalculate TeqO with a different value of MET.

In this way the system regulates the thermal comfort conditions within the passenger compartment, indicated CAR in the drawings. Variations in external environmental conditions represented in the drawings as DIST, which tend to modify the thermal comfort conditions within the passenger compartment CAR, naturally also influence the quantities MIS on which the estimated or measured equivalent temperature Teq depend. In this way the control system is able, as explained, to intervene to renew the optimal thermal comfort conditions.

Naturally, the principle of the invention remaining the same, the details of construction and the embodiments can be widely varied from what has been described and illustrated, without by this departing from the terms of the claims.

## Claims

1. A process for controlling thermal conditions in an environment (CAR) having heat exchange means (CLIM), the said environment (CAR) being the passenger compartment of a vehicle and the said heat exchange means (CLIM) comprising the said vehicle's air conditioning system and being able to control the flow rate (PORT) and temperature (MIX) of the air introduced into the said passenger compartment (CAR), characterised in that it comprises the following steps:

   - setting a reference equivalent temperature (TeqO),
   - determining an equivalent temperature (Teq) at at least one point in the said environment (CAR), the said equivalent temperature (Teq) being the temperature of an environment in thermal equilibrium, having still air and walls at the same temperature in which a human being experiences a thermal sensation substantially identical to that which is experienced in the said environment (CAR), the said equivalent temperature (Teq) being determined, indifferently, in one of the following two ways:

      - - by direct sensing,

      - - by calculation from a plurality of physical quantities,

   - calculating the difference (Terr) between the said reference equivalent temperature (TeqO) and the said equivalent temperature (Teq),
   - activating the said heat exchange means (CLIM) such as to cancel the said difference (Terr).

2. A process according to claim 1, characterised in that the said equivalent temperature (Teq) is detected by first sensor means (STE) comprising a thermoelectric sensor having a significant spatial extent.

3. A process according to claim 1, characterised in that the said equivalent temperature (Teq) is calculated substantially according to the following formula:

$$Teq = (1/Req) [W_c + W_r] + Ts$$

in which:

- $W_c$ is the power exchanged by convection with the outside environment
- $W_r$ is the power exchanged by radiation with the outside environment
- Req is the equivalent resistance of the environment
- Ts is a reference temperature.

4. A process according to claim 3, characterised in that the said power $W_c$ exchanged by convection and the said power $W_r$ exchanged by radiation are calculated substantially according to the following formulae:

$$W_c = h_c . (Ta - Ts)$$

$$W_r = \sigma . E . f . [Tp^4 - Ts^4]$$

in which:

- Ta is the air temperature within the environment
- Tp is the temperature of the walls of the environment
- $h_c$ is the heat exchange coefficient
- $\sigma$ is the Boltzman constant
- E is the emissivity of the walls
- f is the man-wall form factor.

5. A process according to claims 3 and 4, characterised in that the said equivalent temperature ( $Teq_{estimated}$ ) is calculated substantially according to the following formula:

$$Teq_{estimated} = K1 . Teq + K2 . Teq_{tt}$$

in which:

- K1, K2 are numerical coefficients
- Teq is a temperature calculated according to the formulae of claims 3 and 4
- $Teq_{tt}$ is the temperature of treated air calculated substantially according to the following formula:

$$Teq_{tt} = h_c . (Tt - Ts) / Req + Ts$$

   in which Tt is the temperature of air introduced into the said passenger compartment (CAR).

6. A process according to any of claims 3 to 5, characterised in that the said equivalent temperature (Teq) is calculated starting from a plurality of signals (MIS) emitted by second sensor means, the said second sensor means being sensitive to a plurality of physical quantities indicative of the thermal conditions in the said environment (CAR).

7. A process according to claim 6, characterised in that the said second sensor means include a plurality of sensors, each of which is capable of detecting one of the said physical quantities, the said physical quantities being chosen from the group comprising:

- air temperature within the interior of the environment
- air temperature in an environment outside the said environment
- temperature of air entering the environment
- air humidity
- rate of flow of air entering the environment
- thermal radiation entering the environment
- wall temperature of the environment.

8. A system for controlling thermal conditions in an environment (CAR), characterised in that it comprises:

- heat exchange means (CLIM),
- sensor means (STE),
- processor means (CTRL) operatively connected to the said sensor means (STE) and to the said heat exchange means (CLIM),

the said sensor means (STE), the said heat exchange means (CLIM) and the said processor means (CTRL) being configured to operate according to the process as claimed in any of claims from 1 to 7.

## Patentansprüche

1. Verfahren, um den Wärmezustand in einer Umgebung (CAR) zu regeln, die eine Wärmetauschereinrichtung (CLIM) besitzt, wobei es sich bei der Umgebung (CAR) um den Fahrgastraum eines Fahrzeugs handelt, und wobei die Wärmetauschereinrichtung (CLIM) die Klimaanlage des Fahrzeugs enthält und die Strömungsgeschwindigkeit (PORT) sowie die Temperatur (MIX) jener Luft regeln kann, die in den Fahrgastraum (CAR) eingeleitet wird, dadurch gekennzeichnet, daß das Verfahren folgende Schritte enthält:

   - Festsetzen einer Bezugsäquivalenztemperatur (TeqO),
   - Festlegen einer Äquivalenztemperatur (Teq) an zumindest einer Stelle in der Umgebung (CAR), wobei die Äquivalenztemperatur (Teq) die Temperatur einer Umgebung im thermischen Gleichgewicht ist, bei dem die stehende Luft und die Wände auf der gleichen Temperatur liegen, bei der ein Mensch ein Wärmeempfinden erfährt, das im wesentlichen mit jenem ident ist, das er in der Umgebung (CAR) erfährt, wobei die Äquivalenztemperatur (Teq) neutral auf eine der folgenden zwei Arten bestimmt wird:

      -- durch direktes Ermitteln,
      -- durch die Berechnung aus einer Vielzahl von physikalischen Größen,

   - Berechnen der Differenz (Terr) zwischen der Bezugsäquivalenztemperatur (TeqO) und der Äquivalenztemperatur (Teq),
   - Inbetriebsetzen der Wärmetauschereinrichtung (CLIM), um die Differenz (Terr) auszulöschen.

2. Verfahren gemäß Anspruch 1, dadurch gekennzeichnet, daß die Äquivalenztemperatur (Teq) von einer ersten Fühlereinrichtung (STE) ermittelt wird, die einen thermoelektrischen Fühler mit einer beträchtlichen räumlichen Ausdehnung besitzt.

3. Verfahren gemäß Anspruch 1, dadurch gekennzeichnet, daß die Äquivalenztemperatur (Teq) in wesentlichen nach folgender Formel berechnet wird:

$$Teq = (1/Req) \, [W_c + W_r] + Ts$$

   dabei ist:

   - $W_c$ die durch Konvektion mit der äußeren Umgebung ausgetauschte Leistung
   - $W_r$ die durch Strahlung mit der äußeren Umgebung ausgetauschte Leistung
   - Req der Äquivalenzwiderstand der Umgebung
   - $T_s$ eine Bezugstemperatur.

4. Verfahren gemäß Anspruch 3, dadurch gekennzeichnet, daß die durch Konvektion ausgetauschte Leistung $W_c$ und die durch Strahlung ausgetauschte Leistung $W_r$ im wesentlichen nach folgender Formel berechnet werden:

$$W_c = h_c \cdot (Ta - Ts)$$

$$W_r = \sigma \cdot E \cdot f \cdot [Tp^4 - Ts^4]$$

   dabei ist:

   - Ta die Lufttemperatur in der Umgebung
   - Tp die Temperatur der Wände der Umgebung
   - $h_c$ der Wärmeaustauschkoeffizient
   - $\sigma$ die Boltzmann-Konstante
   - E der Emissionsgrad der Wände
   - f der Personen/Wand-Formfaktor

5. Verfahren gemäß Anspruch 3 und 4, dadurch gekennzeichnet, daß die Äquivalenztemperatur (Teq$_{geschätzt}$) im wesentlichen nach folgender Formel berechnet wird:

$$Teq_{geschätzt} = K1 \cdot Teq + K2 \cdot Teq_{tt}$$

dabei ist:

- K1, K2 numerische Koeffizienten
- Teq eine Temperatur, die gemäß der Formel von Anspruch 3 und 4 berechnet wird
- $Teq_{tt}$ die Temperatur der behandelten Luft, die im wesentlichen nach folgender Formel berechnet wird:

$$Teq_{tt} = h_c \cdot (Tt - Ts) / Req + Ts$$

wobei Tt die Temperatur jener Luft ist, die in den Fahrgastraum (CAR) eingeleitet wird.

6. Verfahren gemäß irgendeinem der Ansprüche 3 bis 5, dadurch gekennzeichnet, daß die Äquivalenztemperatur (Teq) ausgehend von einer Vielzahl von Signalen (MIS) berechnet wird, die eine zweite Fühlereinrichtung abgibt, wobei die zweite Fühlereinrichtung auf eine Vielzahl von physikalischen Größen anspricht, die die Wärmezustände in der Umgebung (CAR) angeben.

7. Verfahren gemäß Anspruch 6, dadurch gekennzeichnet, daß die zweite Fühlereinrichtung eine Vielzahl von Fühlern aufweist, von denen jeder eine der physikalischen Größen abtasten kann, wobei die physikalischen Größen aus einer Gruppe ausgewählt werden, die enthält:

- die Lufttemperatur im Inneren der Umgebung
- die Lufttemperatur in einer Umgebung außerhalb der Umgebung
- die Temperatur jener Luft, die in die Umgebung eindringt
- die Luftfeuchtigkeit
- die Strömungsgeschwindigkeit jener Luft, die in die Umgebung eindringt
- die Wärmestrahlung, die in die Umgebung eindringt
- die Wandtemperatur der Umgebung

8. System, um die Wärmezustände in einer Umgebung (CAR) zu regeln, dadurch gekennzeichnet, daß das System enthält:

- eine Wärmetauschereinrichtung (CLIM),
- eine Fühlereinrichtung (STE),
- eine Prozessorstufe (CTRL), die betriebsmäßig mit der Fühlereinrichtung (SET) und der Wärmetauschereinrichtung (CLIM) verbunden ist,

wobei die Fühlereinrichtung (STE), die Wärmetauschereinrichtung (CLIM) und die Prozessorstufe (CTRL) so aufgebaut sind, daß sie gemäß jenem Verfahren arbeiten, das in irgendeinem der Ansprüche 1 bis 7 beansprucht wird.

**Revendications**

1. Procédé pour commander les conditions thermiques dans un environnement (CAR) comportant un moyen d'échange de chaleur (CLIM), ledit environnement (CAR) étant le compartiment à passagers d'un véhicule et ledit moyen d'échange de chaleur (CLIM) comprenant le système de conditionnement d'air de véhicule et pouvant commander le débit (PORT) et la température (MIX) de l'air introduit dans ledit compartiment à passagers (CAR) ;
   caractérisé en ce qu'il comprend les étapes suivantes :

- de réglage d'une température équivalente de référence (TeqO) ;
- de détermination d'une température équivalente (Teq) en au moins un point dudit environnement (CAR), ladite température équivalente (Teq) étant la température d'un environnement en équilibre thermique, ayant toujours de l'air et des parois à la même température, dans lequel un être humain ressent une sensation thermique sensiblement identique à celle qu'il ressent dans ledit environnement (CAR), ladite température équivalente (Teq) étant déterminée, indifféremment, de l'une des deux manières suivantes :

   -- par détection directe ;
   -- par calcul à partir de plusieurs grandeurs physiques ;

- de calcul de la différence (Terr) entre ladite température équivalente de référence (TeqO) et ladite température équivalente (Teq) ;
- d'activation dudit moyen d'échange de chaleur (CLIM) de façon à annuler ladite différence (Terr).

2. Procédé selon la revendication 1, caractérisé en ce que ladite température équivalente (Teq) est détectée par un premier moyen capteur (STE) comprenant un capteur thermoélectrique ayant une étendue spatiale significative.

3. Procédé selon la revendication 1, caractérisé en ce que ladite température équivalente (Teq) est calculée sensiblement d'après la formule suivante :

$$Teq = (1/Req) [W_c + W_r] + Ts$$

ou :

- $W_c$ est la puissance échangée par convection avec l'environnement extérieur ;
- $W_r$ est la puissance échangée par rayonnement avec l'environnement extérieur ;
- Req est la résistance équivalente de l'environnement ;
- Ts est une température de référence.

4. Procédé selon la revendication 3, caractérisé en ce que ladite puissance $W_c$ échangée par convection et ladite puissance $W_r$ échangée par rayonnement sont calculées sensiblement d'après les formules suivantes :

$$W_c = h_c . (Ta - Ts)$$

$$W_r = \sigma . E . f . [Tp^4 - Ts^4]$$

où

- Ta est la température de l'air à l'intérieur de l'environnement ;
- Tp est la température des parois de l'environnement ;
- $h_c$ est le coefficient d'échange de chaleur ;
- $\sigma$ est la constante de Boltzman ;
- E est l'émissivité des parois ;
- f est le facteur de forme homme-paroi.

5. Procédé selon les revendications 3 et 4, caractérisé en ce que ladite température équivalente ($Teq_{estimée}$) est calculée sensiblement d'après la formule suivante :

$$Teq_{estimée} = K1 . Teq + K2 . Teq_{tt}$$

où :

- K1, K2 sont des coefficients numériques ;
- Teq est une température calculée d'après les formules des revendications 3 et 4 ;
  $Teq_{tt}$ est la température de l'air traité calculée sensiblement d'après la formule suivante :

$$Teq_{tt} = h_c . (Tt - Ts) / Req + Ts$$

où :
  Tt est la température de l'air introduit dans ledit compartiment à passagers (CAR).

6. Procédé selon l'une quelconque des revendications 3 à 5, caractérisé en ce que ladite température équivalente (Teq) est calculée à partir de plusieurs signaux (MIS) émis par un second moyen capteur, ledit second moyen capteur étant sensible à plusieurs grandeurs physiques indicatives des conditions thermiques dans ledit environnement (CAR).

7. Procédé selon la revendication 6, caractérisé en ce que ledit second moyen capteur comprend plusieurs capteurs, dont chacun est capable de détecter l'une desdites grandeurs physiques, lesdites grandeurs physiques étant choisies à partir du groupe comprenant :

- la température de l'air à l'intérieur de l'environnement ;
- la température de l'air dans un environnement à l'extérieur dudit environnement ;
- la température de l'air entrant dans l'environnement ;
- l'humidité de l'air ;
- le débit d'air entrant dans l'environnement ;
- le rayonnement thermique entrant dans l'environnement ;
- la température des parois de l'environnement.

8. Système pour commander les conditions thermiques dans un environnement (CAR), caractérisé en ce qu'il comprend :

- un moyen d'échange de chaleur (CLIM) ;
- un moyen capteur (STE) ;
- un moyen processeur (CTRL) relié fonctionnellement audit moyen capteur (STE) et audit moyen d'échange de chaleur (CLIM) ;
   ledit moyen capteur (STE), ledit moyen d'échange de chaleur (CLIM) et ledit moyen processeur (CTRL) étant conçus pour fonctionner suivant le procédé tel que revendiqué dans l'une quelconque des revendications 1 à 7.

# FIG. 1

# FIG. 2

FIG. 3